# EUROPEAN PATENT APPLICATION

(11) **EP 1 398 485 A2**
(43) Date of publication of application: **17.03.2004**
(21) Application number: 03255725.8
(22) Date of filing: 12.09.2003
(51) Int. Cl.: F02D 41/14, F02D 35/00

(54) **Control method**

(30) Priority: 13.09.2002 GB 0221218
(71) Applicant: Delphi Technologies, Inc., Troy, MI 48007 (US)
(72) Inventor: Hermann J. Breitbach, 3328 Crauthem (LU); Joel Duhr, 3369 Leudelange (LU); Stefan G. Billig, 54453 Nittel (DE)
(74) Representative: Keltie, David Arthur

(57) **Abstract**

A method for controlling the concentration of one or more constituents of an exhaust flow from a combustion device (10), the method comprising providing a measuring cell (13) and passing at least a sample of the exhaust flow through the cell (13); transmitting infra red radiation at a reference wavelength through the measuring cell and measuring a reference intensity which is representative of the intensity of radiation transmitted through the cell (13) at the reference wavelength. Infra red radiation, at one or more measurement wavelength, is transmitted through the measuring cell (13) and a measurement intensity is measured which is representative of the intensity of radiation transmitted through the cell at the or each measurement wavelength. The reference intensity is compared with the or each measurement intensity to deduce a concentration value for one or more constituents of the exhaust and one or more control parameters of the combustion device (10) is varied in response to the or each concentration value, thereby to optimise the concentration of the or each constituent of the exhaust flow.

## Description

The invention relates to a method of controlling operation of a combustion device. In particular, but not exclusively, the invention relates to a method of controlling the level of fuelling to an internal combustion engine.

There is an increasing awareness in the automotive industry to control the level of emissions in engine exhaust and it is one object of the present invention to provide a control method for a combustion engine which addresses this need.

According to the present invention, there is provided a method for controlling the concentration of one or more constituents of an exhaust flow from a combustion device, the method comprising:
providing a measuring cell and passing at least a sample of the exhaust flow through the cell,
transmitting infra red radiation at a reference wavelength through the measuring cell and measuring a reference intensity which is representative of the intensity of radiation transmitted through the cell at the reference wavelength,
transmitting infra red radiation, at one or more measurement wavelength, through the measuring cell and measuring one or more measurement intensity which is representative of the intensity of radiation transmitted through the cell at the or each measurement wavelength,
comparing the reference intensity with the or each measurement intensity to deduce a concentration value for one or more constituents of the exhaust flow and,
varying one or more control parameters of the combustion device in response to the or each concentration value, thereby to optimise the concentration of the or each constituent of the exhaust flow.

Commercially available exhaust gas sensors facilitate the measurement of constituent elements of an exhaust flow (for example CO, CO₂, NOx, HC). So-called lambda sensors, for example, are used for laboratory test measurements to measure the concentration of O₂ in the exhaust. Such sensors rely on ion migration, however, and are thus relatively slow, so that their use for real-time measurements is not feasible. The present invention implements an infrared absorption sensor having a capability for real time measurements. The method therefore permits feedback control of the device in response to the measured constituent concentration(s).

The method is particularly beneficial for controlling operation of an internal combustion engine.

By way of example, the method may comprise:
transmitting radiation at a first measurement wavelength which coincides with a peak or maximum in the absorption characteristic of any one of the following exhaust constituents: CO, CO₂, NOx or HC, thereby to permit calculation of the concentration of said constituent within the exhaust flow.

The method may comprise:
measuring the concentration of CO₂ in the exhaust and calculating an air/fuel ratio,
comparing the calculated air/fuel ratio with a predetermined, optimum air/fuel ratio for the engine, and
varying the quantity of fuel delivered to the engine so as to minimise the difference between the calculated air/fuel ratio and the optimum air/fuel ratio.

The method may comprise:
providing an emitter module for emitting radiation to be transmitted through the measuring cell, and
providing a detection module for measuring the intensity of radiation at the reference and measurement wavelengths which is transmitted through the cell.

In one embodiment, the method may comprise providing the emitter module and the detection module within a common unit or housing.

In an alternative embodiment, the method may comprise providing the emitter module and the detection module at opposite ends/on opposite sides of the measuring cell.

In a preferred embodiment, the method includes transmitting radiation from the emitter module through first fibre optic coupling means to the measuring cell, and transmitting radiation which passes unabsorbed through the cell through second fibre optic coupling means to the detection module.

This method is further advantageous as decoupling the emitter module and the detection module from the measuring cell ensures problems associated with mechanical and thermal strain are reduced and the accuracy of measurement is improved. The method is therefore particularly suitable for use on board a vehicle, as it is substantially unaffected by vibrations.

The method may be used to determine the concentration of two or more constituents of the exhaust flow by transmitting radiation through the measuring cell at two or more measurement wavelengths. Each measurement wavelength preferably corresponds to a peak or maximum in the absorption characteristic for a different one of the constituents to be measured.

The method may include providing a detection module having a plurality of detector elements, wherein each detector element is arranged to provide an output signal indicative of the intensity of detected radiation at a different one of the measurement wavelengths.

As each one of the detectors is sensitive to radiation at a different wavelength, the detector output signals can be used to determine the concentration of different constituents of the gas sample if the absorption characteristics of the different constituents are known.

In this embodiment, radiation may be transmitted through the measuring cell by means of a broadband, infrared source for emitting radiation over a wavelength range coinciding with a peak or maximum in the absorption characteristic for two or more constituents of the exhaust.

In an alternative embodiment, the method may include:
providing a detection module having a single detector element which is sensitive to radiation over a range of wavelengths including the reference wavelength and the or each measurement wavelength, and providing an emitter module for emitting pulsed radiation at the reference wavelength and the or each measurement wavelength.

For the purpose of this specification, the absorption characteristic of a gas element or constituent shall be taken to mean the absorption coefficient of the element or constituent as a function of wavelength.

The invention will now be described, by way of example only, with reference to the accompanying drawings in which:
Figure 1 is a schematic diagram of an apparatus for implementing the method of the present invention, and
Figures 2 to 4 are schematic diagrams to illustrate in more detail various embodiments of the apparatus in Figure 1.

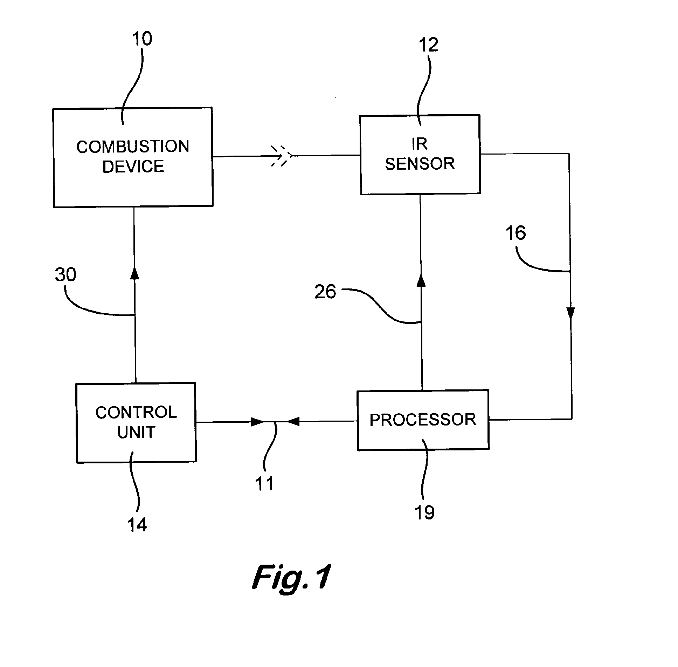

Referring to Figure 1, the method of the present invention may be used to optimise the concentration of a particular constituent of an exhaust flow from a combustion device 10, such as an internal combustion engine or burner. An infrared absorption sensor 12 is controlled by means of an engine controller or control unit 14, which also controls operation of the engine 10 by controlling various engine operating parameters, for example fuel delivery quantity. The sensor 12 provides one or more sensor output signals 16 (only one of which is shown) to a computer processor 19 associated with the engine 10. The or each sensor output signal 16 is representative of the concentration of a constituent of the exhaust flow from the engine, for example CO, CO₂, NOx or HC. The processor 19 receives the sensor output signal(s) 16 and calculates a value for the concentration of the constituent(s) to be measured. The computer processor 19 then provides a processor output signal 11 (bi-directional) to the control unit 14, which in turn provides a first control signal 30 to the engine 10 so as to adjust one or more engine operating parameters and thereby to optimise the constituent concentration level(s). The control unit 14 is also arranged to generate a second control signal 26 for the sensor 12.

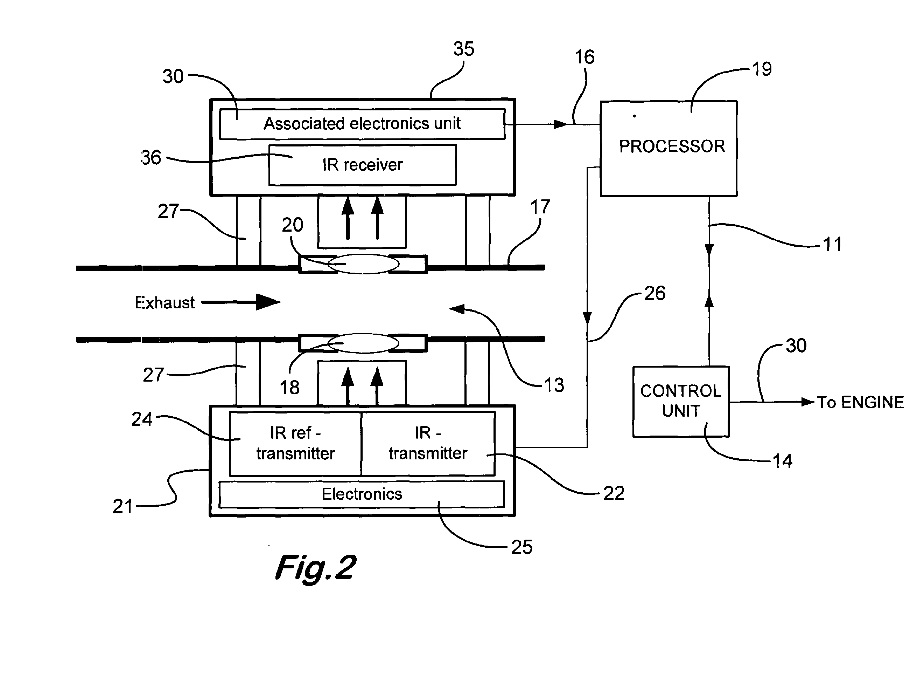

The exhaust gas sensor 12 is shown in more detail in Figure 2, and includes a gas sample cell 13 forming part of the main engine exhaust pipe 17. The exhaust pipe 17 is provided with input and output collimating lenses 18, 20 respectively provided in opposing wall regions of the pipe 17. An emitter module 21 is provided on an input side of the cell 12 and includes a first radiation source 22 for emitting radiation at one or more measurement wavelengths (e.g. λ1) and a second radiation source 24 for emitting radiation at a reference wavelength (λREF). The sources 22, 24 have an associated electronics unit 25, which is responsive to the control signal 26 from the processor 19. A suitable thermal insulator 27 is provided adjacent to the exhaust pipe 17 to insulate the emitter and detection modules 21, 35 from the high temperatures of the exhaust flow through the pipe.

Radiation which passes unabsorbed through the gas cell 13 passes through the outlet lens 20 and is coupled to a detection module 35 including a detector arrangement 36. The detection module 35 also includes an associated electronics unit 30 for providing the output signal 16 to the processor 19, the output signal 16 being representative of the intensity of detected radiation at the detector arrangement 36.

Gases and/or other particulate material within the exhaust absorb radiation at different wavelengths depending on the constituents thereof. Thus, by monitoring the wavelengths of the radiation detected by the detection module 35, the wavelengths absorbed, and hence the constituents of the gas, can be determined. The measurement wavelength, λ1, is selected to coincide with a peak or maximum in the absorption characteristic of the particular constituent it is desired to measure. By way of example, radiation emitted from the source 22 may fall within the range of 3 to 5.5 µm. The reference wavelength λREF is selected to be a wavelength which is not expected to be absorbed by any of the constituents of the exhaust within the cell 13. By comparing the measured intensity of detected radiation at wavelength λ1 with the reference intensity λREF, which is representative of the intensity of radiation at the reference wavelength which passes unabsorbed through the cell 13, the concentration or relative strength of the particular constituent can be determined.

The detection module 35 must be capable of detecting both wavelengths, λ1 and λREF. This may be achieved by providing the detection module 35 with a detector arrangement 36 having a single detector which is sensitive to both wavelengths λ1 and λREF and by controlling the emitter module 21 to provide pulsed transmission radiation. By appropriate programming of the controller 14, a measurement of transmitted radiation at each wavelength, λ1 and λREF, can then be deduced.

The output signals 16, representative of the measured intensity at wavelength λ1 and of the reference intensity at wavelength λREF, are provided to the computer processor 19 for data manipulation. The predetermined absorption characteristic for the constituent of interest is pre-stored within the processor 19, for example in a data map or a look-up table, so as to enable a value of the constituent concentration to be deduced from the measured intensities. The processor 19 provides an output signal 11 to the control unit 14 which is representative of the concentration value. Predetermined, optimum concentration values are stored within the control unit 14 and thus any variation in the concentration value from optimum can be tracked. In response to the output signal 11, the control unit 14 outputs a control signal 30 to the engine 10 so as to adjust one or more engine operating parameters to optimise the constituent concentration level. Any variation from the optimum concentration level can therefore be compensated for in real-time.

For example, it may be required to maintain an optimum air/fuel ratio in an engine burner 10, in which case the sensor 12 is configured to provide a measure of the concentration of CO₂ within the exhaust flow. For a given fuel delivery quantity, the measured concentration of CO₂ is then used to determine the air/fuel ratio. The measured air/fuel ratio is compared with the optimum air/fuel ratio. If the air/fuel ratio is too high, the control unit 14 provides a control signal 30 to the engine 10 to reduce the quantity of fuel delivered to the engine 10. If the air/fuel ratio is too low, a control signal 30 is provided to the engine 10 to increase the quantity of fuel delivered to the engine 10. The optimum air/fuel ratio is therefore maintained by monitoring the concentration of CO₂ in the exhaust flow, and feeding back this information to the control unit 14 to adjust an engine operating parameter accordingly.

Other engine operating parameters may also be adjusted to optimise the concentration levels in the exhaust, for example fuel delivery timing and fuel pressure.

As an alternative to providing a single detector in the detection module 35, the module may be provided with a detector arrangement 36 having two detector elements, each of which is sensitive to a different one of the wavelengths λ1 and λREF and provides an output signal 16 which is representative of the intensity of radiation at the respective wavelength. In this case, it is not necessary to configure the emitter module 21 to provide pulsed transmission of the emitted radiation at wavelengths λ1 and λREF.

The method may be extended to measure the concentration of one or more constituents of the exhaust flow by transmitting radiation at one or more further measurement wavelengths, λ2...λn, through the measuring cell 13. Each further measurement wavelength is selected to coincide with a peak or maximum in the absorption characteristic of the further constituent to be measured. The intensity is measured at the detection module 35 for each further measurement wavelength which passes unabsorbed through the cell 13, and this intensity is compared with the reference intensity and the predetermined absorption characteristic data to determine a concentration value for each further constituent.

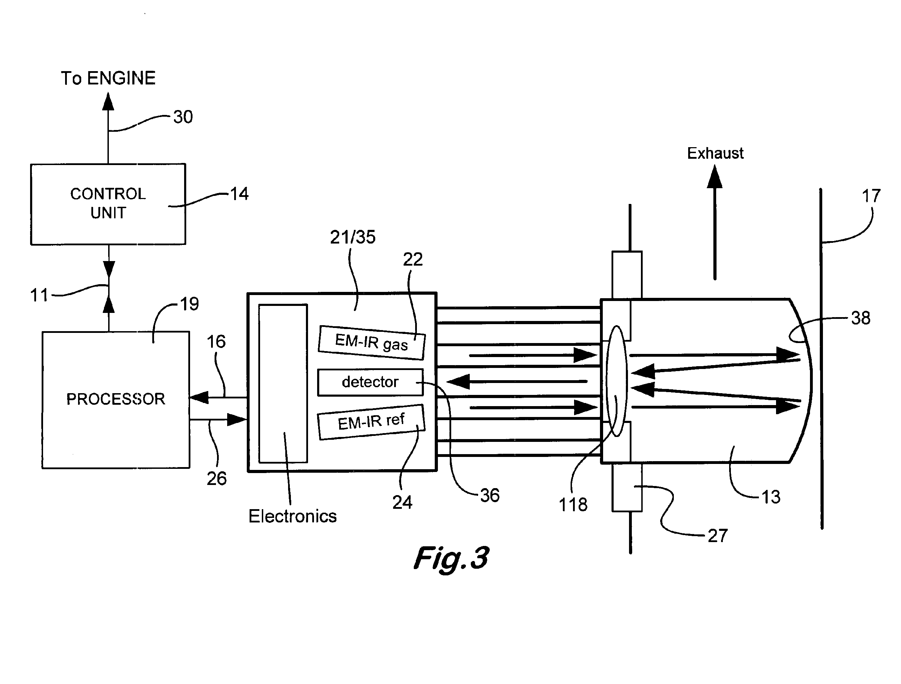

Figure 3 shows an alternative embodiment of the apparatus in Figure 2, in which the emitter and detection functions (provided by sources 22, 24 and detector arrangement 36 respectively) are incorporated within a common emitter/detection unit or module 21/35. An internal surface 38 of the measuring cell 13 is provided with an infra red reflective coating, or may be formed from an infra red reflective material, such that radiation passing unabsorbed through the cell 13 and impinging upon the surface 38 is reflected back through the cell 13 to the module 21/35. Radiation emitted from the emitter/detection module 21/35 is transmitted through free space to a collimating lens 118 provided in the wall of the exhaust pipe 17. Radiation reflected by the surface 38 passes back through the cell 13, through the lens 118 and through free space to the emitter/detection module 21/35.

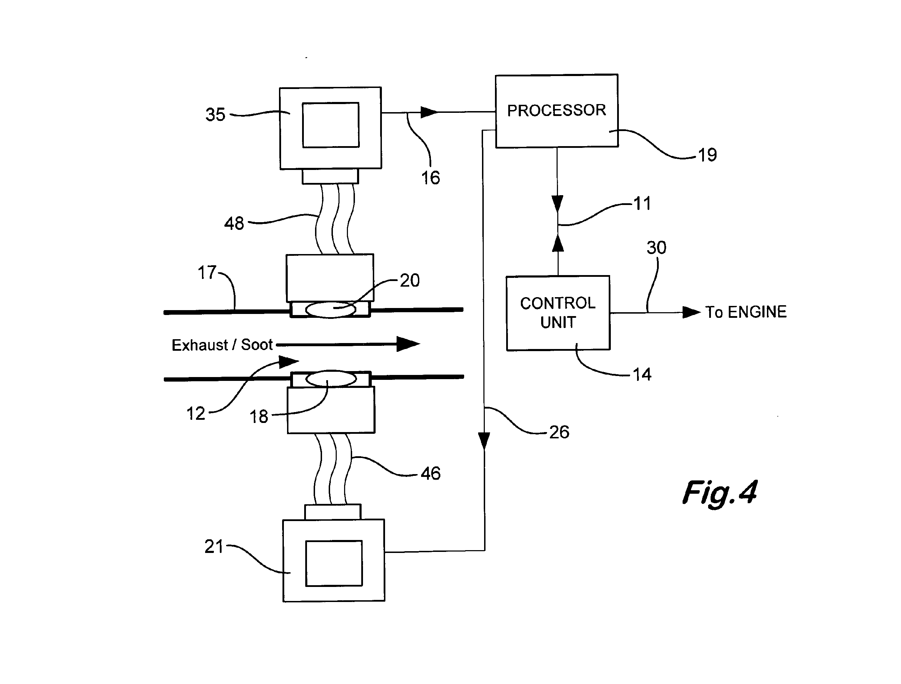

The embodiment of the exhaust gas sensor in Figure 4 is similar to that shown in Figure 3, except that first and second fibre optic coupling means in the form of input and output optical fibres 46, 48 respectively are provided to transmit radiation to and from the emitter/detection module 21/35, through the measuring cell 13. As the emitter module 21 and the detection module 35 are both decoupled from the gas sample cell 13, problems associated with mechanical and thermal strain are reduced and the accuracy of measurement may be improved. Furthermore, by using fibre optic couplings between the emitter/detection modules 21, 35 and the gas sample cell 13, the emitter and detection modules 21, 35 can be mounted in conveniently accessible positions.

It will be appreciated that the measuring cell 13 need not form part of the main exhaust pipe 17, but may be located remotely from the pipe 17. This may provide a further advantage in terms of thermal effects. If the cell 13 is remote from the pipe 17, only a sample of the exhaust is passed through the cell 13 for each measurement, whereas for each of the embodiments described previously substantially all of the flow through the pipe 17 passes through the cell 13.

It will be appreciated that the processing and control functions provided by the processor 19 and the control unit 14 respectively may be incorporated within a single controller, and need not be separate units.

## Claims

1. A method for controlling the concentration of one or more constituents of an exhaust flow from a combustion device (10), the method comprising:
providing a measuring cell (13) and passing at least a sample of the exhaust flow through the cell (13),
transmitting infra red radiation at a reference wavelength through the measuring cell (13) and measuring a reference intensity which is representative of the intensity of radiation transmitted through the cell (13) at the reference wavelength,
transmitting infra red radiation, at one or more measurement wavelength, through the measuring cell (13) and measuring a measurement intensity which is representative of the intensity of radiation transmitted through the cell (13) at the or each measurement wavelength,
comparing the reference intensity with the or each measurement intensity to deduce a concentration value for one or more constituents of the exhaust flow and,
varying one or more control parameters of the combustion device (10) in response to the or each concentration value, thereby to optimise the concentration of the or each constituent of the exhaust flow.

2. The method as claimed in Claim 1, comprising transmitting radiation through the measuring cell (13) at a first measurement wavelength which coincides with a peak or maximum in the absorption characteristic of the constituent to be measured.

3. The method as claimed in Claim 1 or Claim 2, comprising
measuring the concentration of CO₂ in the exhaust flow and calculating an air/fuel ratio,
comparing the calculated air/fuel ratio with a predetermined, optimum air/fuel ratio, and
varying the quantity of fuel delivered to the combustion device (10) so as to minimise the difference between the calculated air/fuel ratio and the optimum air/fuel ratio.

4. The method as claimed in any of Claims 1 to 3, comprising:
providing an emitter module (21) for emitting radiation to be transmitted through the measuring cell (13), and
providing a detection module (35) for measuring the intensity of radiation at the reference wavelength and the or each measurement wavelength transmitted through the cell (13) to the detection module (35).

5. The method as claimed in Claim 4, comprising providing the emitter module (21) and the detection module (35) within a common unit or housing.

6. The method as claimed in Claim 4 or Claim 5, comprising transmitting radiation from the emitter module (21) through first fibre optic coupling means (46) to the measuring cell (13), and transmitting radiation which passes unabsorbed through the cell (13) through second fibre optic coupling means (48) to the detection module (35).

7. The method as claimed in any of Claims 4 to 6, comprising providing a detection module (21) having a plurality of detector elements, wherein each detector element is arranged to provide an output signal (16) indicative of the intensity of detected radiation at a different one of the measurement wavelengths.

8. The method as claimed in Claim 7, comprising transmitting radiation through the measuring cell (13) from a broadband infrared source for emitting radiation over a wavelength range coinciding with a peak or maximum in the absorption characteristic for two or more constituents of the exhaust flow.

9. The method as claimed in any of Claims 4 to 6, comprising providing a detection module (35) having a single detector element which is sensitive to radiation over a range of wavelengths, including the reference wavelength and the or each measurement wavelength, and providing an emitter module (21) for emitting pulsed radiation at the reference wavelength and the or each measurement wavelength.

10. The method as claimed in any of Claims 1 to 9, wherein at least one of the reference wavelength and the measurement wavelength(s) falls within the range 3 to 5.5 µm.
